# FASCICULE DE BREVET EUROPEEN

(11) **EP 3 215 644 B1**
(45) Date de publication et mention de la délivrance du brevet: **31.10.2018**
(21) Numéro de dépôt: 15807687.7
(22) Date de dépôt: 02.11.2015
(51) Int. Cl.: C22B 9/02, B06B 3/00, C22B 21/06

(54) **PROCÉDÉ D'UTILISATION D'UNE SONOTRODE TUBULAIRE**
VERFAHREN ZUR VERWENDUNG EINER ROHRFÖRMIGEN SONOTRODE
PROCESS FOR USING A TUBULAR SONOTRODE

(30) Priorité: 05.11.2014 FR 1402500
(43) Date de publication de la demande: 13.09.2017
(73) Titulaire: Constellium Issoire, 63500 Issoire (FR)
(72) Inventeur: JARRY, Philippe, 38500 Grenoble (FR); ACHARD, Jean-Louis, 38220 Vizille (FR)
(74) Mandataire: Constellium - Propriété Industrielle
(86) Numéro de dépôt international: PCT/FR2015/052941
(87) Numéro de publication internationale: WO 2016/071613

(56) Documents cités:
- JP-A- 2007 239 102
- US-A1- 2012 090 432
- S. KOMAROV ET AL: "A Novel Ultrasonic Csting Process Using Controlled Cavitation and Mel Flow in Hot Top Molds", MATERIALS SCIENCE FORUM, vol. 794-796, 20 juin 2014 (2014-06-20), pages 124-129, XP002741926, DOI: 10.4028/www.scientific.net/MSF.794-796.124
- S. KOMAROV ET AL: "Characterization of acoustic cavitation in water and molten aluminium alloy", ULTRASONIC SONOCHEMISTRY, vol. 20, 2013, pages 754-761, XP002741927,

## Description

L'invention concerne le domaine du traitement d'alliages d'aluminium liquide par ultrasons. Plus précisément, elle est relative à un procédé amélioré utilisant au moins une sonotrode en céramique réfractaire permettant une transmission optimisée des ultrasons aux fins de traitement tels que le dégazage (élimination de l'hydrogène dissous dans le métal liquide), l'action mécanique sur les oxydes présents dans l'alliage (mouillage, fragmentation, agglomération, diminution de leur diamètre apparent par compactage dans le champ de pression acoustique...), l'affinage du grain, la mise au titre, le changement de la composition de l'alliage ou tout autre traitement permettant d'améliorer les propriétés mécaniques de l'alliage d'aluminium une fois refroidi et solidifié.

Il est connu que les ultrasons de puissance permettent de dégazer les alliages légers liquides, en particulier les alliages d'aluminium [G.I. Eskin, Ultrasonic Treatment of Light Alloy Melts, Gordon and Breach Science Publishers, 1998]. L'hydrogène dissous dans l'alliage d'aluminium liquide diffuse vers les bulles de cavitation générées par le champ de pression ultrasonore ; l'oscillation des bulles ainsi formées sous l'effet du champ de pression acoustique produit un effet de diffusion amplifiée, dite rectifiée; l'utilisation d'un gaz de purge et/ou d'un vide partiel au-dessus du bain métallique pour améliorer l'efficacité du dégazage a été étudiée et brevetée ; de plus les ultrasons contribuent à disperser finement les bulles de gaz de purge (US 2007/0235159 A1 ; WO2011/127402 A1). US210/090432 divulgue une sonotrode tubulaire qui est utilisée pour le traitement de l'aluminium et de ses alliages.

Toutefois, les régions affectées par le champ de pression acoustique se situent à proximité de la sonotrode. Les bulles de cavitation elles-mêmes absorbent une partie de la puissance injectée, et il en va de même des inclusions (en particulier des oxydes) présentes dans l'alliage d'aluminium liquide, qui de plus constituent des germes de cavitation. Plus l'alliage d'aluminium liquide contient de gaz dissous et d'inclusions d'oxydes où s'adsorbe l'hydrogène, plus les ultrasons sont absorbés par la cavitation même que ces impuretés font germer. C'est pourquoi en pratique le volume affecté utilement par un système d'insonification ne dépasse pas quelques litres, ou une dizaine de cm autour de la sonotrode. Les seules applications industrielles se situent alors dans le domaine de la fonderie de moulage où des volumes restreints peuvent être dégazés; ou bien, pour la coulée continue, dans le domaine des faibles débits de métal (ordre de grandeur 1- 10 tonnes/heure) comme par exemple en coulée sur roue [Southwire Ultra-D™ process]. Pour les coulées semi-continues à gros débit de métal (50-100 tonnes/heures) comportant des poches de dégazage de l'ordre du mètre-cube, et dédiées à des alliages très exigeants en termes de dégazage et de propreté inclusionnaire, le problème de la montée en échelle n'est pas résolu par l'état de la technique.

Les lacunes de ces méthodes sont dues en particulier au manque de stabilité de l'interface guide d'onde/alliage d'aluminium liquide. Il est connu en effet que les guides d'ondes doivent être mouillés par l'alliage d'aluminium liquide pour permettre la transmission de l'énergie vers l'alliage d'aluminium liquide. Pour cette raison, les guides d'ondes utilisés sont en métal, notamment en acier ou titane.

Toutefois cela ne suffit pas à l'obtention d'un mouillage parfait, et des méthodes ont été développées pour l'améliorer. En témoigne notamment le brevet EP0035545B1, sous priorité de 1979, de « Reynolds Metal Company » revendiquant le dépôt d'un film d'aluminium en phase vapeur sur une sonotrode en titane. Mais en fait, même dans une telle configuration, la qualité du mouillage évolue en cours d'utilisation du fait de la réaction de la matière du guide d'ondes avec l'alliage d'aluminium liquide.

Les matériaux réfractaires ne sont pas utilisés dans les alliages d'aluminium précisément parce qu'ils ne sont pas mouillés par l'alliage d'aluminium liquide. Seul un procédé de dépôt chimique permettrait d'obtenir le mouillage, mais pour un temps limité, ce qui n'est ni fiable ni pratique ni économique.

Il n'existe donc pas à ce jour de méthode ni d'appareil capable de traiter de manière fiable un alliage d'aluminium liquide dans une fraction importante de l'alliage d'aluminium coulé.

Or il existe un réel besoin pour le traitement et la purification des alliages d'aluminium pour lesquels une performance en termes d'élimination de la porosité, ou d'augmentation du module, ou d'affinage du grain amélioré ou de renforcement par des particules est utile, en particulier dans le domaine de la coulée des alliages pour l'aéronautique, des alliages composites pour les applications nucléaires, des alliages de décolletage ayant des propriétés d'usinage améliorées, ou encore des alliages de moulage ou de coulée continue présentant une coulabilité améliorée.

Un des buts de la présente invention est ainsi de contourner la difficulté d'insonification de grands volumes d'alliage d'aluminium liquide et de permettre la montée en échelle. A cet effet, la présente invention propose un procédé d'utilisation d'une sonotrode mouillée par de l'alliage d'aluminium liquide comprenant les étapes selon la revendication 1.

Selon une variante, la sonotrode à l'étape a) a été préalablement mouillée par immersion partielle dans un alliage d'aluminium liquide (M) comportant une teneur d'au moins 0.05 % de magnésium et application d'ultrasons de puissance.

Grâce à ce procédé, la sonotrode mouillée par l'alliage d'aluminium liquide, permet une transmission optimisée des ultrasons de puissance. Le mouillage maintenu de façon durable, notamment sur plusieurs jours sans opération de nettoyage ou polissage de la sonotrode, permet le traitement efficace de l'alliage d'aluminium liquide. Par ailleurs, la forme tubulaire de sonotrode permet d'optimiser le phénomène de cavitation dans l'alliage d'aluminium liquide ce qui assure le traitement sur un grand volume et notamment à l'échelle industrielle.

En effet, l'alliage d'aluminium liquide contenu à l'intérieur de la sonotrode tubulaire est le siège d'une cavitation extrêmement intense du fait qu'elle est produite par des ondes convergeant au centre de la sonotrode tubulaire et qu'il n'y a pas, de ce fait, de déperdition de puissance comme cela se produit à l'extérieur d'une sonotrode de la forme d'une tige pleine. Les bulles de cavitation ainsi générées dans l'alliage d'aluminium liquide pompent le gaz contenu dans la sonotrode tubulaire de façon très efficace.

La sonotrode tubulaire fournie à l'étape a) du procédé comporte une première région d'extrémité ouverte et une seconde région d'extrémité de préférence obturée et l'étape b) comprend l'immersion de la première région d'extrémité ouverte dans l'alliage d'aluminium liquide.

En effet, les inventeurs ont constaté que lorsqu'une sonotrode tubulaire ouverte à une première région d'extrémité est plongée dans un creuset de l'alliage d'aluminium liquide et fermée à une seconde région d'extrémité, et qu'elle est excitée par des ultrasons de puissance transmis au moyen d'un transducteur d'émission d'ultrason de puissance, fixé à une bride métallique serrée ou collée ou vissée autour de la partie supérieure de la sonotrode tubulaire, une baisse du niveau de l'alliage d'aluminium dans le creuset se produit du fait d'un effet de pompage dans la sonotrode tubulaire. Ce pompage produit un vide partiel dans la sonotrode tubulaire, d'où une montée du niveau de l'alliage d'aluminium liquide dans la sonotrode tubulaire et une baisse concomitante du niveau de l'alliage d'aluminium liquide dans le creuset autour de la sonotrode tubulaire. Ainsi, l'utilisation de cette sonotrode tubulaire crée un mécanisme de pompage turbulent qui permet de dégazer très rapidement l'alliage d'aluminium liquide grâce à la création d'un fort gradient de concentration d'hydrogène entre le métal loin de la sonotrode et le métal contenu dans la sonotrode tubulaire et soumis à cavitation intense.

De la même façon, ce procédé permet également de fragmenter, de mouiller et de froisser les films d'oxydes présents dans l'alliage d'aluminium liquide. Les oxydes présentent alors des tailles réduites au moment de la coulée, ce qui inhibe la germination de la porosité de solidification.

Selon le même principe, ce pompage turbulent contribue également à un effet d'affinage des grains, par fragmentation et/ou refusion partielle des bras de dendrites induites par les courants acoustiques ou « acoustic streaming », provoqués par l'injection d'énergie acoustique dans l'alliage liquide. Lors de la solidification de l'alliage, une quantité accrue de joints de grains est ainsi obtenue. La coulabilité de l'alliage en est améliorée et les propriétés mécaniques de l'aluminium brut de solidification obtenu sont grandement améliorées, notamment la ductibilité du matériau et sa capacité d'élongation, et ce tant à cause de l'élimination des oxydes et de la porosité qu'en raison de l'affinage du grain.

Avantageusement, l'étape c) du procédé comprend une étape i) de mise sous atmosphère inerte anhydre de la surface de l'alliage d'aluminium liquide à l'extérieur et à l'intérieur de la sonotrode tubulaire. Cette disposition permet de réduire les contacts entre l'humidité de l'atmosphère et l'alliage d'aluminium liquide de sorte à améliorer l'efficacité du dégazage.

Selon une possibilité, la mise sous atmosphère inerte anhydre de la surface de l'alliage d'aluminium liquide à l'intérieur de la sonotrode tubulaire selon l'étape i) comprend l'injection d'un gaz inerte anhydre à l'intérieur de la sonotrode tubulaire. Le gaz utilisé peut notamment être de l'argon sec ou de l'azote sec ou tout autre gaz anhydre, non réactif à l'alliage d'aluminium liquide dans les conditions d'application.

De préférence, le gaz inerte anhydre est injecté et circule par l'intermédiaire de la seconde région d'extrémité de la sonotrode tubulaire de façon à évacuer l'hydrogène extrait du métal par les bulles de cavitation. Un tube d'injection et un tube d'évacuation sont par exemple scellés de manière étanche à des orifices prévus au sommet de la seconde région.

Selon un autre aspect, la surface de l'alliage d'aluminium liquide à l'extérieur de la sonotrode tubulaire est maintenue sous une couverture de gaz sec et inerte de façon à éviter un regazage par la surface libre de l'alliage.

Selon une disposition complémentaire, un piège à hydrogène, configuré pour réagir avec l'hydrogène et le retenir est disposé à l'intérieur de la sonotrode tubulaire. Le piège est avantageusement placé à l'intérieur de la sonotrode tubulaire par l'intermédiaire d'un tube d'injection d'un gaz anhydre inerte à l'alliage d'aluminium liquide scellé de façon étanche au sommet de la seconde région d'extrémité de la sonotrode tubulaire. Le dégazage de l'alliage d'aluminium liquide contenu à l'intérieur de la sonotrode est alors extrêmement rapide.

Le procédé comprend en outre une étape de création d'un champ de vitesse descendante dans l'alliage d'aluminium liquide à la première région d'extrémité de la sonotrode tubulaire, de sorte à générer un flux descendant d'alliage d'aluminium liquide à l'intérieur de la sonotrode tubulaire. Grâce à la création de ce champ de vitesse descendante à la bouche de la sonotrode tubulaire, le renouvellement de l'alliage à l'intérieur de la sonotrode tubulaire est activé, en aspirant l'alliage d'aluminium vers le bas. Ce champ de vitesses peut être créé par le phénomène de courant acoustique, connu sous l'appellation anglo-saxonne « *acoustic streaming* ». Les échanges sont alors augmentés entre l'alliage d'aluminium dégazé à l'intérieur de la sonotrode tubulaire et l'alliage d'aluminium à l'extérieur. La cinétique de dégazage initialement liée à la cinétique de diffusion de l'hydrogène entre le métal au loin et le métal soumis à cavitation dans la sonotrode tubulaire est améliorée par la convection ainsi générée. Il en résulte qu'un important volume d'alliage d'aluminium liquide peut être traité par ce procédé.

Selon une possibilité, l'alliage d'aluminium liquide est placé dans un creuset à induction configuré pour générer un champ de vitesse descendant dans l'alliage d'aluminium liquide à la première région d'extrémité de la sonotrode tubulaire. La convection qui est créée par les forces électromagnétiques induites dans le métal liquide permet ainsi d'accélérer le renouvellement de l'alliage d'aluminium liquide dans la sonotrode tubulaire.

Selon une autre possibilité, l'étape a) du procédé consiste à fournir une sonotrode tubulaire dont la première région d'extrémité présente une forme évasée configurée pour générer un champ de vitesse descendant à la première région d'extrémité de la sonotrode tubulaire. La sonotrode prend ainsi une forme de « trompette » ou de « tulipe » s'ouvrant vers l'extérieur de la sonotrode à la première région d'extrémité. Cette forme évasée crée par « acoustic streaming » un champ de vitesse vertical descendant. L'écoulement généré s'oppose à l'effet d'aspiration vers le haut de la sonotrode de sorte que le mélange entre l'alliage d'aluminium liquide à l'extérieur de la sonotrode et celui dégazé à l'intérieur de cette dernière est accéléré, favorisant ainsi le renouvellement de l'alliage à l'intérieur de la sonotrode.

Selon un autre mode de réalisation possible, l'application d'ultrasons de puissance de l'étape c) est réalisée de façon intermittente et le procédé comprend, entre deux applications d'ultrasons de puissance, l'emploi d'une surpression appliquée sur la surface de l'alliage d'aluminium liquide à l'intérieur de la sonotrode tubulaire, de sorte à former un champ de vitesse descendante intermittent dans l'alliage d'aluminium liquide. Cette surpression est par exemple obtenue par injection d'argon sec à intervalle régulier de façon à chasser l'alliage d'aluminium liquide dégazé à l'extérieur de la sonotrode tubulaire et à ré-aspirer de l'alliage mélangé lors de la baisse de pression qui suit. Ce procédé agit comme un diviseur à chaque cycle de refoulement.

Selon une autre variante, le procédé comprend une étape ii) de mise sous vide partiel de l'alliage d'aluminium liquide à l'intérieur de la sonotrode tubulaire pendant l'application intermittente des ultrasons de puissance à l'étape c). Ce vide partiel, de l'ordre d'une centaine de pascal, permet de faire chuter la pression partielle d'hydrogène au-dessus de la zone de cavitation et active le dégazage.

Selon encore une autre variante, le procédé comprend la disposition d'une sonotrode complémentaire, présentant globalement une forme de tige à extrémité plate, dans l'alliage d'aluminium liquide à la première région d'extrémité de la sonotrode tubulaire, l'application d'ultrasons de puissance de l'étape c) étant réalisée de façon continue, et le procédé comprenant une étape iii) consistant à exciter la sonotrode complémentaire en mode longitudinal, de sorte à créer un courant acoustique intermittent dans l'alliage d'aluminium liquide. Le positionnement de la sonotrode complémentaire permet d'augmenter le champ de vitesse de l'acoustic streaming. Cette variante permet elle aussi d'entrainer l'alliage d'aluminium liquide vers le bas de la sonotrode par un effet de trompe, ce qui permet de renouveler l'alliage contenu à l'intérieur de la sonotrode tubulaire.

Selon une possibilité, la sonotrode complémentaire est excitée de façon intermittente. L'hypothèse que les inventeurs formulent pour expliquer l'amélioration obtenue est que dans ce cas, l'effet de chasse est amélioré.

Selon une alternative, la sonotrode complémentaire est excitée en continu. L'hypothèse est que ce mode de réalisation permet d'améliorer la continuité du renouvellement de l'aluminium dans la sonotrode tubulaire.

Avantageusement, le procédé comprend une étape y) comportant l'incorporation de particules de céramique dans l'alliage d'aluminium liquide A contenu dans la sonotrode tubulaire. Cette disposition permet d'élaborer un composite à matrice métallique en vue d'obtenir un alliage d'aluminium renforcé, qui une fois refroidi, présente des propriétés de résistance mécanique améliorées.

Selon une possibilité, le procédé comprend une étape comportant l'immersion au moins partielle d'un fil d'alliage-mère dans l'alliage d'aluminium liquide A contenu dans la sonotrode tubulaire. Cette configuration permet alors la mise au titre rapide de l'alliage d'aluminium liquide, combinée au dégazage et à la fragmentation des oxydes de l'alliage, grâce à la dissolution accélérée du fil dans le champ de cavitation.

Avantageusement, le procédé comprend une étape comportant l'application de NH3 gazeux dans l'alliage d'aluminium liquide A contenu dans la sonotrode tubulaire de sorte à former un matériau composite de Al-AlN. Il est ainsi possible d'apporter des éléments initialement absents dans l'alliage d'aluminium liquide par exemple en remplaçant l'alimentation en gaz inerte sec en un gaz et réactif dans les conditions utilisées. La cavitation joue alors le rôle de catalyseur de la réaction entre l'alliage d'aluminium liquide et le gaz réactif.

D'autres aspects, buts et avantages de la présente invention apparaîtront mieux à la lecture de la description suivante de plusieurs modes de réalisation de celle-ci, donnée à titre d'exemple non limitatif et faite en référence aux dessins annexés. Les figures ne respectent pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.
La figure 1 illustre une sonotrode tubulaire utilisée dans le procédé selon un mode de réalisation de l'invention.
La figure 2 illustre une étape i) de mise sous atmosphère anhydre selon un mode de réalisation de l'invention.
La figure 3 illustre schématiquement la création d'un champ de vitesse descendante selon un mode de réalisation de l'invention.
La figure 4 illustre schématiquement la création d'un champ de vitesse descendante selon un deuxième mode de réalisation de l'invention.
La figure 5 illustre schématiquement une sonotrode tubulaire évasée selon un mode de réalisation de l'invention.
La figure 6 illustre schématiquement une étape d'incorporation de particules de céramique selon un mode de réalisation de l'invention.
La figure 7 illustre schématiquement une étape d'incorporation d'un fil d'alliage-mère selon un mode de réalisation de l'invention.

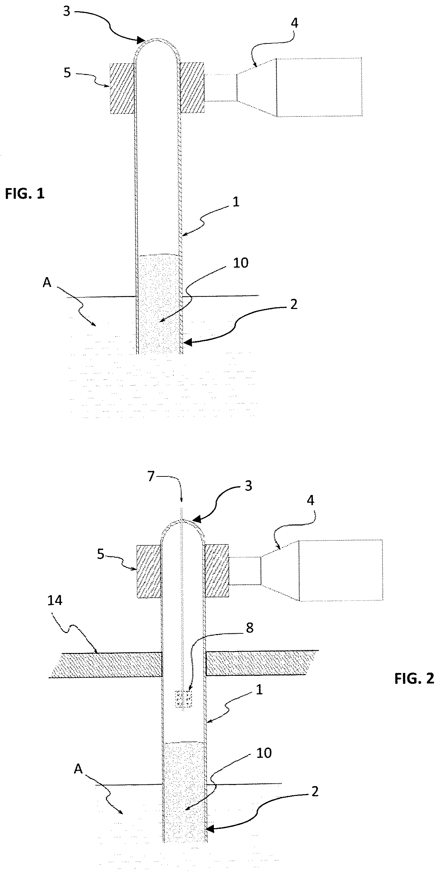

Comme illustré à la figure 1, le procédé consiste à plonger une sonotrode 1 tubulaire dans un bain d'un alliage d'aluminium liquide et d'appliquer des ultrasons de puissance de sorte à obtenir une cavitation 10 intense au centre de la sonotrode 1.

La sonotrode 1 tubulaire utilisée est en SIALON, elle mesure 60 mm de diamètre. Elle comprend une première région d'extrémité 2 ouverte et plongée dans l'alliage d'aluminium et une seconde région d'extrémité 3 obturée sur laquelle est fixé un transducteur d'émission d'ultrasons de puissance 4 par l'intermédiaire d'une bride 5.

Selon une variante non illustrée, la sonotrode 1 a été préparée au préalable par la formation d'un mouillage par un alliage d'aluminium liquide M. Pour ce faire, la sonotrode 1 tubulaire a été immergée partiellement dans un bain d'alliage d'aluminium liquide M comportant une teneur d'au moins 0.05 % de magnésium en poids. Puis elle a été soumise à des ultrasons de puissance d'une fréquence d'environ 22 kHz avec une puissance de 10 W jusqu'à l'obtention du mouillage par l'alliage d'aluminium liquide M. Une fois mouillée, la sonotrode 1 a été plongée dans l'alliage d'aluminium liquide ne contenant pas de magnésium et une nouvelle application d'ultrasons de puissance a permis de régénérer le mouillage. Celui-ci peut être ainsi préservé pendant plus de 5 jours sans nécessiter d'intervention de nettoyage ou de polissage complémentaire. L'application intermittente ou continue d'ultrasons de puissance suffit à elle seule pour maintenir le mouillage de la sonotrode 1 tubulaire dans l'alliage d'aluminium.

Dans le mode de réalisation illustré à la figure 1, des ultrasons sont appliqués avec une fréquence d'environ 22 kHz, et le niveau de l'alliage d'aluminium liquide diminue très rapidement dans le creuset, ce qui constitue un signe de cavitation 10 extrêmement intense à l'intérieur de la sonotrode 1 tubulaire, conduisant au dégazage de l'alliage. La teneur initiale du bain en hydrogène était de 0.27 ml/100 g ; après 10 minutes de traitement, la teneur est descendue à 0.17 ml/100 g ; après 10 minutes supplémentaires de traitement, la teneur a atteint une valeur proche de la teneur d'équilibre qui, compte tenu de l'humidité ambiante, était de 0.14 ml/100 g. La vitesse de dégazage initiale obtenue avec ce dispositif de insonification 6 est donc de 0.01 ml/100 g/min, alors que la vitesse de dégazage spontané est environ 10 fois plus faible. La vitesse maximale obtenue en début de dégazage avec une sonotrode-tige à fond plat en titane est par ailleurs de 0.0035 ml/100 g/min, soit trois fois plus faible.

Une hypothèse pouvant expliquer l'intensité de la cavitation 10 obtenue à l'intérieur de la sonotrode 1 réside en ce que la cavitation 10 est produite par des ondes convergeant au centre de la sonotrode 1 tubulaire et qu'il n'y a pas de ce fait de déperdition de puissance comme cela se produit à l'extérieur de la sonotrode 1. Les bulles de cavitation 10 ainsi générées dans l'alliage d'aluminium liquide pompent le gaz contenu dans la sonotrode 1 tubulaire. Lorsque la sonotrode 1 tubulaire est fermée dans la seconde région d'extrémité 3, ce pompage produit un vide partiel dans la sonotrode 1, d'où une montée du niveau de l'alliage d'aluminium dans celle-ci et l'observation d'une baisse concomitante du niveau de l'alliage d'aluminium A dans le creuset autour de la sonotrode 1. Cette montée turbulente dans la sonotrode 1, accompagnée d'une cavitation 10 extrêmement intense, augmente fortement la surface d'échange entre l'alliage d'aluminium liquide et le gaz contenu dans la sonotrode 1. Ceci génère un mécanisme de pompage turbulent qui permet de dégazer très rapidement l'alliage liquide contenu dans la sonotrode 1.

Ainsi, le dispositif d'insonification 6 illustré à la figure 1 fonctionne comme une pompe d'aspiration à ultrasons pour l'alliage d'aluminium liquide.

Selon des variantes de réalisation non illustrées, le matériau de la sonotrode 1 est choisi parmi les céramiques, telles que les nitrures ou les oxynitrures qui sont inertes à l'alliage d'aluminium liquide dans les conditions de mise en oeuvre du procédé. La fréquence des ultrasons de puissance utilisables est située dans une plage allant de 10 à 100 kHz et la puissance est supérieure à 10 W.

Selon une possibilité illustrée à la figure 2, la surface de l'alliage d'aluminium liquide est placée sous atmosphère inerte anhydre, à l'intérieur du volume de la sonotrode 1 tubulaire et également à l'extérieur de la sonotrode 1, de sorte à éviter un regazage par la surface de l'alliage d'aluminium liquide A. Un tube 7 scellé de manière étanche au niveau la seconde région d'extrémité 3, au sommet de la sonotrode 1 tubulaire, permet l'injection d'argon anhydre à l'intérieur de la sonotrode 1. La surface de l'alliage d'aluminium liquide à l'extérieur de la sonotrode 1 tubulaire est maintenue elle aussi sous une couverture d'argon anhydre (gaz inerte) maintenue par un moyen d'obturation 14.

Pour améliorer encore le dispositif d'insonification 6, les inventeurs ont introduit, suspendu à un thermocouple, un tube 7 d'injection d'argon anhydre et un piège à hydrogène. Le thermocouple sert à placer correctement le piège à une température qui permette son activation (entre 300 et 400°C) le long du gradient vertical descendant qui règne dans la sonotrode 1. Le dégazage de l'alliage d'aluminium contenu à l'intérieur de la sonotrode 1 est alors extrêmement rapide du fait de l'intensité de la turbulence et de la cavitation 10 concomitantes à l'effet de pompage par l'alliage liquide de l'atmosphère interne de la sonotrode 1 tubulaire, et du fait que cette atmosphère est maintenue à un très bas niveau de pression partielle d'hydrogène par le piège à hydrogène 8.

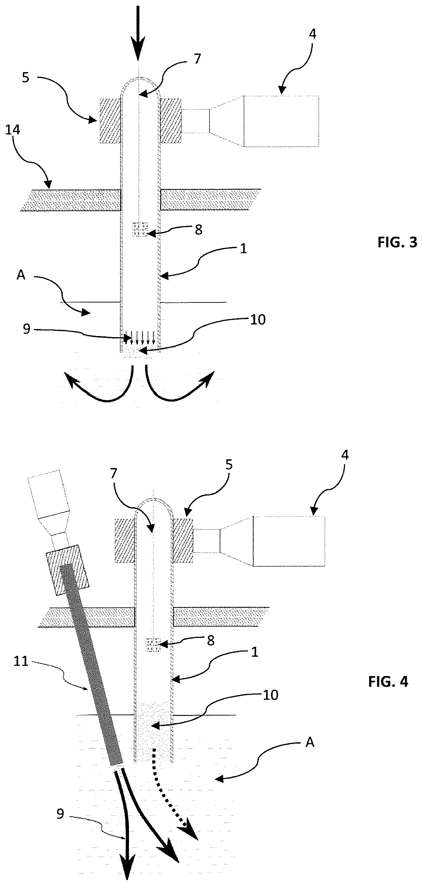

Selon une variante, le procédé comprend une étape comportant l'introduction d'un gaz réactif tel que le NH3 gazeux, à la place du gaz neutre d'argon tel qu'illustré à la figure 3, dans l'alliage d'aluminium liquide contenu dans la sonotrode 1 tubulaire de sorte à former un matériau composite d'Al-AlN. En effet, les ultrasons de puissance permettent d'atteindre des pics de température très élevés et très locaux au moment de l'implosion des bulles de cavitation 10. Ceci permet de catalyser la réaction suivante : Al + NH₃ → AlN + 1.5H₂ qui ne se produit classiquement qu'à très haute température. De plus, le piège à hydrogène 8 situé à l'intérieur de la sonotrode 1 tubulaire capte l'hydrogène dégagé et évite de regazer l'alliage métallique lorsque la réaction se produit. Il est ainsi possible d'élaborer simplement des composites Al-AlN avec des tailles de particules de 10 à 100 nm.

Comme illustré à la figure 3, un champ de vitesse descendant 9 est créé dans l'alliage d'aluminium liquide A à proximité de l'embouchure de la première région d'extrémité 2 de la sonotrode 1 de sorte à favoriser les échanges entre l'alliage à l'intérieur et l'alliage à l'extérieur de la sonotrode 1 et améliorer la cinétique de dégazage pour traiter de gros volume d'alliage en un temps compatible avec les contraintes industrielles. La solution illustrée à la figure 3 consiste à appliquer à intervalles réguliers des surpressions d'argon sec dans le tube 7 de façon à chasser l'alliage liquide dégazé dans le volume du creuset contenant l'alliage d'aluminium liquide et à ré-aspirer de l'alliage d'aluminium mélangé lors de la baisse de pression qui suit.

La figure 4 décrit la solution qui consiste à introduire une sonotrode complémentaire 11 en forme de tige pleine, excitée en mode longitudinal à côté de l'embouchure de la sonotrode 1 tubulaire, pour créer localement un puissant courant acoustique intermittent, entre deux applications régulières d'ultrasons de puissance, entrainant l'alliage interne vers le bas de la sonotrode 1 par un effet de trompe. Ceci permet ainsi de renouveler l'alliage contenu à l'intérieur de la sonotrode 1 tubulaire.

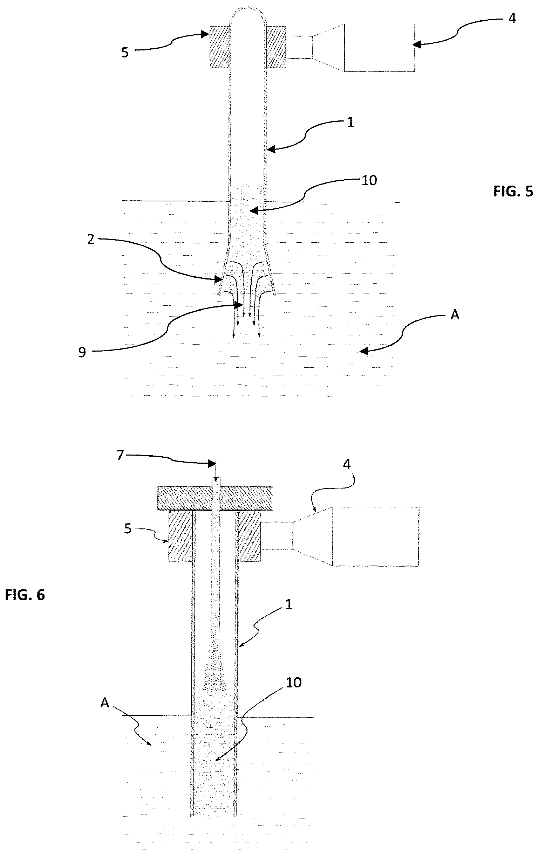

La figure 5 décrit la solution qui consiste à utiliser une sonotrode 1 tubulaire évasée à la première région d'extrémité 2, de façon à créer par « *acoustic streaming* » un champ de vitesse vertical descendant.

D'autres modes de réalisations non illustrés existent pour créer ce champ de vitesse descendant 9. Une alternative consiste notamment à utiliser un creuset à induction conçu de telle manière qu'il existe autour de la sonotrode 1 tubulaire un champ de vitesse vertical descendant qui entraîne l'alliage d'aluminium intérieur et permette son renouvellement accéléré. Selon une autre alternative, l'application des ultrasons de puissance est exécutée par intermittence entre lesquelles une surpression d'argon anhydre est employée à l'intérieur de la sonotrode 1 par l'intermédiaire du tube 7 scellé de façon étanche à la seconde région d'extrémité 3. Selon encore une autre possibilité, le vide est réalisé à l'intérieur de la sonotrode 1 entre chaque surpression d'argon sec, pendant l'application des ultrasons de puissance.

La figure 6 illustre un traitement de l'alliage d'aluminium liquide consistant à incorporer des particules de SiC selon l'étape y) du procédé, de sorte à fabriquer un composite à matrice métallique. D'autres matériaux en céramiques réfractaires peuvent être utilisés, tel que de l'alumine, selon les propriétés mécaniques finales souhaitées pour le composite. L'introduction des particules se fait conjointement à l'injection d'argon anhydre par le tube 7 scellé et est réalisée en deux phases: une première phase consiste à introduire les particules pendant que l'alliage d'aluminium liquide monte dans la sonotrode 1 tubulaire en s'incorporant au gaz présent dans le tube 7 et les particules convoyées par lui. Cette phase consiste à préparer une sorte d'alliage composite-mère liquide à l'intérieur de la sonotrode 1 tubulaire. La deuxième phase consiste à refouler ce mélange dense et à le diluer dans le reste de l'alliage d'aluminium par l'un des moyens décrits plus haut. Puis on recommence avec la première phase décrite. Les inventeurs ont constaté que pour éviter que le gaz, incorporé en même temps que les particules, ne fasse flotter les particules et ne les rejette à la surface, l'utilisation intermittente d'une sonotrode complémentaire 11 tige comme décrite à la figure 4 permet à la fois de distribuer les particules dans l'alliage liquide et de fragmenter les bulles de gaz par effet de cavitation 10 inertielle.

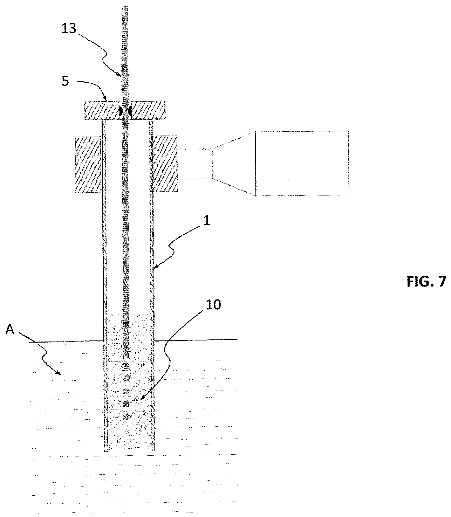

Une mise au titre de l'alliage d'aluminium liquide A est maintenant décrite en relation avec la figure 7. Un fil d'alliage-mère 13 est introduit au sein de la sonotrode 1 tubulaire et scellé hermétiquement à la seconde région d'extrémité 3 de sorte à plonger au moins en partie dans l'alliage d'aluminium à l'intérieur de la sonotrode 1. La mise au titre de l'alliage d'aluminium liquide est alors concomitante au dégazage et à la fragmentation des films d'oxydes lors de l'application des ultrasons de puissance. En variante, le fil 13 peut être un fil affinant AlTiB ou AlTiC, ou un fil fourré avec des éléments anti-recristallisants dont on souhaite sursaturer l'alliage, tels que Cr, Zr, Hf, V, Sc, etc... Il est alors possible d'obtenir une distribution extrêmement fine de fins intermétalliques primaires, alors que les mêmes quantités introduites au four conduisent en coulée verticale à des intermétalliques primaires grossiers rédhibitoires. En coulée semi-continue verticale, l'introduction se fait soit au niveau du répartiteur juste avant la coulée, soit au niveau du marais lui-même. De même, en coulée d'alliages dits hypersiliciés, l'introduction à l'aide de la sonotrode 1 tubulaire d'un fil AlCuP permet de disperser les germes AlP et d'obtenir des cristaux de silicium primaire beaucoup plus fins que ceux obtenus lorsque le fil AlCuP est introduit de façon standard.

Ainsi la présente invention permet d'appliquer simplement des ultrasons de puissance à un alliage d'aluminium liquide sur une longue période et permet d'effectuer des traitements très variés, du dégazage, à l'affinage et au changement de la composition de l'alliage d'aluminium (changement en proportion et en nouveaux éléments), sur des volumes nettement plus importants que ce qu'il était possible d'obtenir classiquement, et avec des temps de cycle compatibles avec les contraintes industrielles.

Il va de soi que l'invention n'est pas limitée au mode de réalisation décrit ci-dessus à titre d'exemple mais qu'elle comprend tous les équivalents techniques et les variantes des moyens décrits ainsi que leurs combinaisons.

## Revendications

1. Procédé d'utilisation d'une sonotrode (1), dans un alliage d'aluminium liquide, comprenant les étapes suivantes :
a) Fournir une sonotrode (1) tubulaire formée dans un matériau substantiellement inerte à l'aluminium liquide, tel qu'une céramique, par exemple un oxynitrure de silicium, la sonotrode comportant une première région d'extrémité (2) ouverte et une seconde région d'extrémité (3) de préférence obturée,
b) Plonger au moins en partie la région d'extrémité (2) ouverte de la sonotrode (1) tubulaire dans l'alliage d'aluminium liquide et
c) Appliquer des ultrasons de puissance à l'alliage d'aluminium liquide par l'intermédiaire de la sonotrode (1) tubulaire.
d) Créer un champ de vitesse descendant (9) dans l'alliage d'aluminium liquide à la première région d'extrémité (2) de la sonotrode (1) tubulaire, de sorte à générer un flux descendant d'alliage d'aluminium liquide à l'intérieur de la sonotrode (1) tubulaire.

2. Procédé selon la revendication 1, dans lequel la sonotrode à l'étape a) a été préalablement mouillée par immersion partielle dans un alliage d'aluminium liquide (M) comportant une teneur d'au moins 0.05% de magnésium et application d'ultrasons de puissance,

3. Procédé selon l'une des revendications 1 ou 2, dans lequel l'étape c) comprend une étape i) de mise sous atmosphère inerte anhydre de la surface de l'alliage d'aluminium liquide à l'extérieur et à l'intérieur de la sonotrode (1) tubulaire.

4. Procédé selon la revendication 3, dans lequel la mise sous atmosphère inerte anhydre de la surface de l'alliage d'aluminium liquide à l'intérieur de la sonotrode (1) tubulaire selon l'étape i) comprend l'injection d'un gaz inerte anhydre à l'intérieur de la sonotrode (1) tubulaire.

5. Procédé selon la revendication 1, dans lequel l'alliage d'aluminium liquide est placé dans un creuset à induction configuré pour générer un champ de vitesse descendant dans l'alliage d'aluminium liquide à la première région d'extrémité (2) de la sonotrode (1) tubulaire.

6. Procédé selon la revendication 1, dans lequel l'étape a) consiste à fournir une sonotrode (1) tubulaire dont la première région d'extrémité (2) présente une forme évasée configurée pour générer un champ de vitesse descendant à la première région d'extrémité 2 de la sonotrode (1) tubulaire.

7. Procédé selon l'une des revendications 1 à 6, dans lequel l'application d'ultrasons de puissance de l'étape c) est réalisée de façon intermittente et dans lequel le procédé comprend, entre deux applications d'ultrasons de puissance, l'emploi d'une surpression appliquée sur la surface de l'alliage d'aluminium liquide à l'intérieur de la sonotrode (1) tubulaire, de sorte à former un champ de vitesse descendant (9) intermittent dans l'alliage d'aluminium liquide.

8. Procédé selon la revendication 7, dans lequel le procédé comprend une étape ii) de mise sous vide de l'alliage d'aluminium liquide à l'intérieur de la sonotrode (1) tubulaire pendant l'application intermittente des ultrasons de puissance à l'étape c).

9. Procédé selon l'une des revendications 1 à 4, dans lequel le procédé comprend la disposition d'une sonotrode complémentaire (11), présentant globalement une forme de tige à extrémité plate, dans l'alliage d'aluminium liquide (A) à la première région d'extrémité (2) de la sonotrode (1) tubulaire, dans lequel l'application d'ultrasons de puissance de l'étape c) est réalisée de façon continue, et dans lequel le procédé comprend une étape iii) consistant à exciter la sonotrode complémentaire (11) en mode longitudinal, de sorte à créer un courant acoustique intermittent dans l'alliage d'aluminium liquide.

10. Procédé selon l'une des revendications 1 à 9, dans lequel le procédé comprend une étape y) comportant l'incorporation de particules de céramique dans l'alliage d'aluminium liquide contenu dans la sonotrode (1).

11. Procédé selon l'une des revendications 1 à 9, dans lequel le procédé comprend une étape comportant l'immersion au moins partielle d'un fil d'alliage-mère (13) dans l'alliage d'aluminium liquide contenu dans la sonotrode (1) tubulaire.

12. Procédé selon l'une des revendications 1 à 9, dans lequel le procédé comprend une étape comportant l'application de NH3 gazeux dans l'alliage d'aluminium liquide contenu dans la sonotrode (1) tubulaire de sorte à former un matériau composite de Al-AlN.

## Patentansprüche

1. Verfahren zur Verwendung einer Sonotrode (1) in einer flüssigen Aluminiumlegierung mit folgenden Schritten:
a) Bereitstellen einer rohrförmigen Sonotrode (1), die aus einem gegenüber flüssigem Aluminium im Wesentlichen inerten Material gebildet ist, wie z.B. einer Keramik, beispielsweise einem Siliziumoxynitrid, wobei die Sonotrode einen ersten offenen Endbereich (2) und einen zweiten, vorzugsweise verschlossenen Endbereich (3) aufweist,
b) Zumindest teilweises Eintauchen des offenen Endbereichs (2) der rohrförmigen Sonotrode (1) in die flüssige Aluminiumlegierung und
c) Beaufschlagen der flüssigen Aluminiumlegierung mit Leistungsultraschall über die rohrförmige Sonotrode (1),
d) Erzeugen eines Abwärtsgeschwindigkeitsfeldes (9) in der flüssigen Aluminiumlegierung am ersten Endbereich (2) der rohrförmigen Sonotrode (1), um einen Abwärtsfluss der flüssigen Aluminiumlegierung innerhalb der rohrförmigen Sonotrode (1) zu erzeugen.

2. Verfahren nach Anspruch 1, wobei die Sonotrode in Schritt a) durch teilweises Eintauchen in eine flüssige Aluminiumlegierung (M) mit einem Magnesiumgehalt von mindestens 0,05 % und Anwendung von Leistungsultraschall zuvor benetzt wurde.

3. Verfahren nach einem der Ansprüche 1 oder 2, wobei der Schritt c) einen Schritt i) des wasserfreien Inertisierens der Oberfläche der flüssigen Aluminiumlegierung außerhalb und innerhalb der rohrförmigen Sonotrode (1) umfasst.

4. Verfahren nach Anspruch 3, wobei das wasserfreie Inertisieren der Oberfläche der flüssigen Aluminiumlegierung innerhalb der rohrförmigen Sonotrode (1) gemäß Schritt i) das Einspritzen eines wasserfreien Inertgases innerhalb der rohrförmigen Sonotrode (1) umfasst.

5. Verfahren nach Anspruch 1, wobei die flüssige Aluminiumlegierung in einen Induktionstiegel eingebracht wird, der dazu ausgelegt ist, ein Abwärtsgeschwindigkeitsfeld in der flüssigen Aluminiumlegierung am ersten Endbereich (2) der rohrförmigen Sonotrode (1) zu erzeugen.

6. Verfahren nach Anspruch 1, wobei der Schritt a) das Bereitstellen einer rohrförmigen Sonotrode (1) umfasst, deren erster Endbereich (2) eine aufgeweitete Form aufweist, die dazu ausgelegt ist, ein Abwärtsgeschwindigkeitsfeld am ersten Endbereich (2) der röhrenförmigen Sonotrode (1) zu erzeugen.

7. Verfahren nach einem der Ansprüche 1 bis 6, wobei die Beaufschlagung mit Leistungsultraschall aus Schritt c) intermittierend durchgeführt wird und wobei das Verfahren zwischen zwei Beaufschlagungen mit Leistungsultraschall die Verwendung eines Überdrucks umfasst, der an der Oberfläche der flüssigen Aluminiumlegierung innerhalb der rohrförmigen Sonotrode (1) angelegt wird, um ein intermittierendes Abwärtsgeschwindigkeitsfeld (9) in der flüssigen Aluminiumlegierung zu bilden.

8. Verfahren nach Anspruch 7, wobei das Verfahren einen Schritt ii) des Evakuierens der flüssigen Aluminiumlegierung innerhalb der rohrförmigen Sonotrode (1) während der intermittierenden Beaufschlagung mit Leistungsultraschall in Schritt c) umfasst.

9. Verfahren nach einem der Ansprüche 1 bis 4, wobei das Verfahren das Anordnen einer komplementären Sonotrode (11), die insgesamt die Form eines Stabs mit flachem Ende aufweist, in der flüssigen Aluminiumlegierung (A) am ersten Endbereich (2) der rohrförmigen Sonotrode (1) umfasst, wobei die Beaufschlagung mit Leistungsultraschall aus Schritt c) kontinuierlich durchgeführt wird, und wobei das Verfahren einen Schritt iii) umfasst, bei dem die komplementäre Sonotrode (11) im Längsmodus angeregt wird, um einen intermittierenden akustischen Strom in der flüssigen Aluminiumlegierung zu erzeugen.

10. Verfahren nach einem der Ansprüche 1 bis 9, wobei das Verfahren einen Schritt y) aufweist, der das Einbringen von Keramikpartikeln in die in der Sonotrode (1) enthaltene flüssige Aluminiumlegierung umfasst.

11. Verfahren nach einem der Ansprüche 1 bis 9, wobei das Verfahren einen Schritt aufweist, der das zumindest teilweise Eintauchen eines Vorlegierungsdrahts (13) in die in der Sonotrode (1) enthaltene flüssige Aluminiumlegierung umfasst.

12. Verfahren nach einem der Ansprüche 1 bis 9, wobei das Verfahren einen Schritt aufweist, der die Benutzung von gasförmigem NH3 in der in der rohrförmigen Sonotrode (1) enthaltenen flüssigen Aluminiumlegierung umfasst, um ein Al-AlN-Verbundmaterial zu bilden.

## Claims

1. Method for using a sonotrode (1), in a liquid aluminium alloy, including the following steps:
a) Providing a tubular sonotrode (1) formed in a material substantially inert to liquid aluminium, such as a ceramic, for example, a silicon oxynitride, the sonotrode comprising a first open end region (2) and a second preferably closed end region (3),
b) Submerging at least partially the open end region (2) of the tubular sonotrode (1) in the liquid aluminium alloy and
c) Applying power ultrasound on the liquid aluminium alloy by means of the tubular sonotrode (1),
d) Creating a descending velocity field (9) in the liquid aluminium alloy at the first end region (2) of the tubular sonotrode (1), so as to generate a descending liquid aluminium alloy flow inside the tubular sonotrode (1).

2. Method according to claim 1, wherein the sonotrode in step a) has been previously wetted by partial submersion in a liquid aluminium alloy (M) comprising a content of at least 0.05% of magnesium and applying power ultrasound.

3. Method according to one of claims 1 of 2, wherein step c) includes a step i) of placing the liquid aluminium alloy surface under an inert anhydrous atmosphere outside and inside the tubular sonotrode (1).

4. Method according to claim 3, wherein the placement of the liquid aluminium alloy surface under an inert anhydrous atmosphere inside the tubular sonotrode (1) according to step i) includes the injection of an anhydrous inert gas inside the tubular sonotrode (1).

5. Method according to claim 1, wherein the liquid aluminium alloy is placed in an induction crucible configured so as to generate a descending velocity field in the liquid aluminium alloy at the first end region (2) of the tubular sonotrode (1).

6. Method according to claim 1, wherein step a) consists in providing a tubular sonotrode (1), the first end region (2) of which has a flared shape configured so as to generate a descending velocity field at the first end region 2 of the tubular sonotrode (1).

7. Method according to one of claims 1 to 6, wherein the application of power ultrasound of step c) is performed intermittently, and wherein the method includes, between two power ultrasound applications, the use of an over-pressure applied on the surface of the liquid aluminium alloy inside the tubular sonotrode (1), so as to form an intermittent descending velocity field (9) in the liquid aluminium alloy.

8. Method according to claim 7, wherein the method includes a step ii) of placing the liquid aluminium alloy under a partial vacuum inside the tubular sonotrode (1) during the intermittent application of power ultrasound in step c).

9. Method according to one of claims 1 to 4, wherein the method includes the arrangement of a complementary sonotrode (11), generally in the form of a rod with a flat end, in the liquid aluminium alloy (A) at the first end region (2) of the tubular sonotrode (1), wherein the application of power ultrasound of step c) is performed continuously, and wherein the method includes a step iii) consisting in exciting the complementary sonotrode (11) in longitudinal mode, so as to create an intermittent acoustic current in the liquid aluminium alloy.

10. Method according to one of claims 1 to 9, wherein the method incudes a step y) comprising the incorporation of ceramic particles in the liquid aluminium alloy contained in the sonotrode (1).

11. Method according to one of claims 1 to 9, wherein the method includes a step comprising the at least partial submersion of a master alloy wire (13) in the liquid aluminium alloy contained in the tubular sonotrode (1).

12. Method according to one of claims 1 to 9, wherein the method includes a step comprising the application of gaseous NH3 in the liquid aluminium alloy contained in the tubular sonotrode (1) so as to form a composite Al-AlN material.
